# EUROPEAN PATENT APPLICATION

(11) **EP 1 113 646 A1**
(43) Date of publication of application: **04.07.2001**
(21) Application number: 99204623.5
(22) Date of filing: 31.12.1999
(51) Int. Cl.: H04L 29/06, G06F 13/40, G06F 9/46, H04L 12/24

(54) **A server module and a distributed server based internet access scheme and method of operating the same**

(71) Applicant: Advanced Communication Research, 06560 Sophia Antipolis (FR)
(72) Inventor: Dujardin, Serge, 3500 Hasselt (BE); Pari, Jean-Christophe, 83700 Saint-Raphael (FR)
(74) Representative: Bird, William Edward

(57) **Abstract**

A wide area data carrier network is described comprising:
one or more access networks;
a plurality of server units housed in a server module and installed on said wide area data carrier network so that each server module is accessible from the one or more access networks, the server module being adapted so that it may be located at any position in the wide area network; and
an operations centre for management of the server module, the server module being connected to the operations centre for the exchange of management messages through a network connection.

The server module comprises at least one server card insertable in the server module, the server card having a central processing unit and at least one rewritable, non-volatile disc memory device mounted on the card.

## Description

The present invention relates to the provision of server capacity in a wide area digital telecommunications network, in particular on any system which uses a protocol such as the TCP/IP set of protocols used on the Internet. The present invention also relates to a multi-server device which may be used in the digital telecommunications network in accordance with the present invention. The present invention also relates to a computing card for providing digital processing intelligence.

### TECHNICAL BACKGROUND

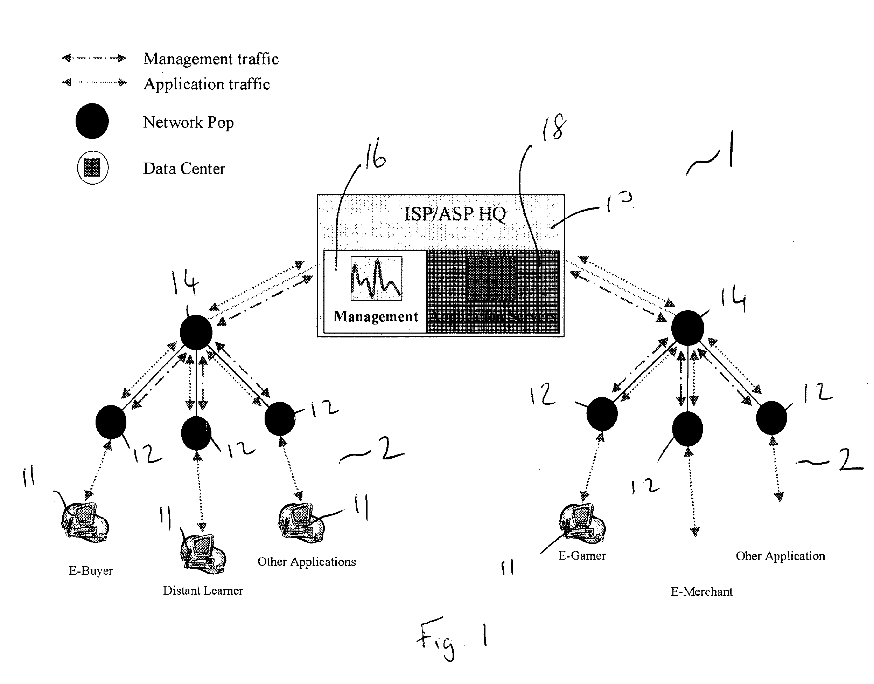

A conventional access scheme to a wide area digital telecommunications network 1 such as the Internet is shown schematically in Fig. 1. Fig. 1 represents an IT centric Application Service Provider (ASPR) architecture. All servers 18 are deployed in a central data centre 10 where a data centric infrastructure is created to install, host and operate the ASPR infrastructure. Conventional Telecom Operators and Internet Service Providers are becoming more and more interested in becoming Application Service Providers, in order to have a new competitive advantage by providing added value services in addition to their existing bearer services provided to telephone subscribers.

Application provisioning through IP networks, such as the Internet, is an emerging market. Service Providers in general have to provision application services in their network infrastructure. For this purpose, IT data centres 10 are conventionally used. Typically, the application servers 18 on which the applications offered are stored are located at the data centre 10 as well as some centralised management functions 16 for these application servers 18. Access is gained to these servers 14 via a "point of presence" 12 and one or more concentrators 14. A customer 11 dials a telephone number for a POP 12 and is connected to an Internet provider's communications equipment. Using a browser such as Netscape's Navigator™ or Microsoft's Explorer™ a session is then typically set up with an application server 18 in the remote data centre 10. Typically, a protocol stack such as TCP/IP is used to provide the transport layer and an application program such as the abovementioned browser, runs on top of the transport layers. Details of such protocols are well known to the skilled person (see for example, "Internet: Standards and Protocols", Dilip C. Naik, 1998 Microsoft Press).

These IT centric data centres 10 may be suitable within the confines of a single organisation, i.e. on an Intranet, but in a network centric and distributed environment of telecom operators and Internet Service Providers such a centralised scheme can result in loss of precious time to market, in increased expense, in network overloads and in a lack of flexibility. From an infrastructure point of view IT data centres 10 are very different from Telecom Centres or POPs 12, 14. The executed business processes that exploit an IT data centre are very different from business processes that have been designed for operating telecom and internet wide area environments. It is expensive to create a carrier class availability (99.999%) in an IT centric environment. Maintaining an IT environment (Operating Systems and applications) is very different from maintaining a network infrastructure for providing bearer services because of the differences in architecture. IT centric environments do not scale easily. Where it is planned that hundreds of potential subscribers will access the applications a big "mainframe" system may be installed. Upgrading from a small to a medium to a large system is possible but this is not graceful - it implies several physical migrations from one system to another. Telecom Networks support hundreds of thousands of customers and do this profitably. To support this kind of volume it is difficult to provide and upgrade IT centric architectures in an economic manner. Since all the application servers 18 are centrally deployed, all of the subscribers 11 (application consumers) will connect to the centre of the network 1. Typically the HQ where most of his IT resources are based. By doing this, network traffic is forced from the network edges into the network centre where the application servers are installed. Then, all the traffic has to go back to the network edge to deliver the information to the networked application client. The result is that expensive backbone bandwidth usage is not optimised and packets are sent from edge to centre and back only because the location of the application servers.

IT centric application providers generally have two options for setting up the provisioning platform in the data centre 10. Either a dedicated server platform (i.e. one application per server) or a shared server (i.e. multiple applications per server) is set-up. As an example, one server could be provided for per e-merchant wishing to run an e-shop on the server or multiple e-merchant shops could be set up on a single server. Setting up, maintaining, expanding and adapting business or network applications that integrate many players (suppliers, partners, customers, co-workers or even children wanting to play "internet games") into a common web-enabled chain is becoming increasingly complex. Such networked applications often require sophisticated multitiered application architectures, a continuously changing infrastructure, 24 hour, seven days a week availability, and the ability to handle rapid and unpredictable growth. While individual large companies often have a highly skilled IT personnel department and financial resources to meet these demands, many Service Providers cannot provide such services. For many telecom operators or internet service providers that are preparing to become an application service provider, the only viable option is to host applications in a specially created and centralised data centre 10 where additional specially trained staff can be employed economically. Only when this "infrastructure" is complete, can applications be delivered via the Internet to the "application consumers" 11.

A theoretical advantage of this conventional approach is that all resources are centralized so that resources can be shared and hence, economy of scale can be achieved for higher profits and a better quality of service. The advantage is theoretical because the ASPR is facing a potential "time bomb" in the cost of operations as their subscriber population explodes. Also, the initial price tag per user that comes along with shared (fault tolerant) application servers is very high in comparison to the infrastructure cost per user in telecom environments.

As can be seen from Fig. 1, and independent of the topology of the network, data from all subscribers 11 accessing their subscribed applications through the designated POP 12, will transit the network 1 until it has reached the application data centre 10. High capacity network pipes need to be provisioned everywhere in the network 1 in order to guarantee the throughput required to obtain acceptable application performance. Even bigger links need to be provisioned around the application data centre 10 itself to guarantee acceptable application performance. It is difficult for network planners to provision the network bandwidth without knowing exactly which future applications, requiring unknown bandwidth will be accessed from any or all of POP's by a yet undefined number of subscribers simultaneously.

Difficulties have already been reported. News items on television can cause a rush to access certain WEB sites. If thousands of people do this at the same time (e.g. as caused by a pop concert sent live over the Internet, or a special and very attractive offer on the Internet of limited duration) the present infrastructure cannot deal with the data flow and many cannot access the site.

The problem can become a vicious circle - first subscriptions are sold for services, the applications are then provisioned to provide the services and as this type of business expands the network pipes have to be upgraded. This has a direct and negative consequence that the users in the start-up phase or at some later time will have unacceptable and/or unpredictable application response times and will find the application performance behaviour unsatisfactory. An alternative is to forecast the application provisioning success and to invest accordingly into the network and data centre infrastructure based on the commercial forecasts. This places the financial risk with the provider since there are so many "unknown" variables.

Another disadvantage of IT centric shared server architecture shown in Fig. 1 is security and the maintenance of a secure environment. One of the first rules in security is to keep things simple and confinable. The system is preferably limited to a confinable functionality that can be easily defined, maintained and monitored. Implementing shared network application servers that will provision hundreds of different applications for several hundred thousand of application users is, from a security policy point of view, not realistic without hiring additional security officers to implement and monitor the security policy that has been defined.

The IT centric way of implementing application provisioning may be satisfactory in the beginning but it does not scale very well either from a network/traffic point of view, or from an application maintenance point of view, or from a security point of view.

Another difficulty with modern application software is that few users can adequately use all the functionality provided. This is left to experts. This has resulted in large IT departments to maintain both the software and the hardware of work stations, personal computers and the Local Area networks to which they are attached. The size and cost of these departments adds considerable cost to any operation and is prohibitive for small and medium size enterprises. Loss of LAN connectivity can cripple the operation of a company if it lasts for a few hours during which time no fax can be sent, no document can be printed unless standalone devices are provided as a back-up. There is a requirement to allow economic provisioning and maintenance of word processing, scheduling and financial applications in Small- and Medium-sized Enterprises (SME).

It is an object of the present invention to provide a communications network, a method of operating the same and network elements which enable the service provider provision applications, such as e-commerce, web hosting, intranet mail, distant learning applications etc. in a fast, easy and cost effective way.

It is an object of the present invention to provide a communications network, a method of operating the same and network elements with which the business risks are lower than with conventional systems.

It is an object of the present invention to provide a communications network, a method of operating the same and network elements which can be gracefully upgraded without either a high initial outlay or a lot of major network upgrades later.

It is an object of the present invention to provide a communications network, a method of operating the same and network elements with improved flexibility and response times.

It is an object of the present invention to provide a server module which can be used as a network element and a method of operating the same which provides high security of data and application programs as well as a high security of availability.

It is an object of the present invention to provide a server module which can be used as a network element and a method of operating the same which is easy to maintain by non-engineer grade staff.

### SUMMARY OF THE INVENTION

The present invention may provide a wide area data carrier network comprising:
one or more access networks;
a plurality of server units housed in a server module and installed in said wide area data carrier network so that each server module is accessible from the one or more access networks; and
an operations centre for management of the server module, the server module being connected to the operations centre for the exchange of management messages through a network connection. The server units are active servers (rather than passive shared file message stores). The network connections to the server module may be provided by any suitable connection such as an interprocess communication scheme (IPC), e.g. named pipes, sockets, or remote procedure calls and via any suitable transport protocol, e.g. TCP/IP, etc. The management function may include at least any one of remote monitoring of the status of any server unit in a module, trapping alarms, providing software updates, activating an unassigned server module, assigning a server module to a specific user, extracting usage data from a server module or server unit, intrusion detection (hacker detection). Preferably, each server unit includes a central processor unit and a secure memory device for storing the operating system and application programs for running the server unit. Optionally, a rewritable, non-volatile storage device such as a hard disk is provided on the server unit. The server unit is preferably adapted so that the rewritable, non-volatile storage device contains only data required to execute the application programs and/or the operating system program stored in the secure memory device but does not contain program code. In particular the CPU is preferably not bootable via the rewritable, non-volatile storage device. Preferably, the server module is configured so that each server unit access the administration card at boot-up to retrieve configuration data for the respective server unit. In particular, the server unit retrieves its internal IP address used by the proxy server card to address the server unit. Preferably, each server unit is mounted on a pluggable card. The server card is preferably plugged into a backplane which provides connections to a power supply as well as a data connection to other parts of the server module connected in the form of a local area network.

The present invention also includes a method of operating a wide area data carrier network having one or more access networks comprising the steps of:
providing a plurality of server units housed in a server module in said wide area data carrier network so that each server module is accessible from the one or more access networks;
providing management of the server module remotely through a network connection to the server module.

The present invention also includes a server module comprising:
a plurality of server cards insertable in the server module, each server card providing an active server, e.g. a network server. Each server card is preferably a motherboard with at least one rewritable, non-volatile disc memory device mounted on the motherboard. The motherboard includes a central processing unit and a BIOS memory. An Input/Output (I/O) device is preferably provided on the card for communication with the central processing unit, for example a serial or parallel COM port. At least one local area network interface, is preferably mounted on the server card, e.g. an Ethernet™ chip. Preferably, the operating system for the central processing unit and optionally at least one application program is pre-installed in a solid state memory device. Preferably, the program code for the operating system and for the application program if present is preferably securely stored in the solid state memory, e.g. in an encrypted and/or scrambled form. The system can preferably not be booted from the disc memory. Preferably, the server card has a serial bus for monitoring functions and states of the server card.

Preferably, the server card is pluggable into a connector. Each server unit is preferably pluggable into a local area network (LAN) on the server module which connects each server to an administration card in the server module. A plurality of server units are preferably connected via a connector into which they are pluggable to a hub which is part of the server module LAN. A proxy server is preferably included as part of the server module LAN for providing proxy server facilities to the server units. Preferably, two proxy servers are used to provide redundancy. Access to the LAN of the server module from an external network is preferably through a switch which is included within the LAN. The server module may be located in a local area network (LAN), e.g. connected to a switch or in a wide area network, e.g. connected via switch with a router or similar.

The present invention also includes a digital processing engine mounted on a card, for instance to provide a server card, the card being adapted to be pluggable into a connector, the digital processing card comprising:
a central processor unit; and
a first rewritable, non-volatile disk memory unit mounted on the card. The digital processing card may also include a second rewritable solid state memory device (SSD) mounted on the card. The SSD may be for storing an operating system program and at least one application program for execution by the central processing unit. The card may be adapted so that the central processor is booted from the solid state memory device and not from the rewritable, non-volatile disc memory unit. Preferably, the disk memory is a hard disc. Preferably, more than one hard disk is provided for redundancy. An input/output device may also be mounted on the card. For example the I/O device may be a communications port, e.g. a serial or parallel port for communication with the CPU. The card is preferably flat (planar) its dimensions much such that it's thickness
is much thinner than any of its lateral dimensions, e.g. at least four times thinner in its thickness than any of its lateral dimensions.

Whereas the current ASPR technology is based on *IT Centric* platforms, one aspect of the present invention is an ASPR *network centric* environment. The provisioned applications would be offered under a subscription format to potential subscribers that would be able to "consume" the applications rather than acquiring the applications prior to their usage. In essence, the application consumer (e.g. e-merchant, e-businesses or e-university) would be liberated from the financial and technical burden that comes with acquiring and installing new applications and keeping those applications up-to-date.

Application customers and users benefit from the economies of scale for the shared infrastructure, but also expect high service levels and predictable costs for their business critical applications. As concrete examples, the data transmission is increased, the security level is higher, and the prices are conveniently packaged with fixed monthly payments. The present invention may be deployed by Application Service Providers (ASPR). Application service provisioning is provided in which application software is remotely hosted by a third party such as an ISP (Service provider in general) that is accessed by the subscribing customer over the (internet) network.

### BRIEF DESCRIPTION OF THE DRAWINGS

Fig. 1 is a schematic representation of a conventional wide area data carrier network.

Fig. 2 is a schematic representation of a conventional wide area data carrier network in accordance with an embodiment of the present invention.

Fig. 3 is a schematic representation of a server module in accordance with an embodiment of the present invention.

Fig. 4 is a schematic representation of a server chassis in accordance with an embodiment of the present invention.

Fig. 5 is a schematic representation of a management chassis in accordance with an embodiment of the present invention.

Fig. 6 is a schematic representation of a server card in accordance with an embodiment of the present invention.

Fig. 7 is a schematic representation showing how the proxy server of the management chassis transfers requests to an individual server card in accordance with an embodiment of the present invention.

Fig. 8 is a schematic representation of a how the configuration is uploaded to a server card on boot-up in accordance with an embodiment of the present invention.

Fig. 9 is schematic representation of how management information is collected from a server card and transmitted to a remote operations centre in accordance with an embodiment of the present invention.

Fig. 10 is a schematic representation of a server module in accordance with an embodiment of the present invention used in a local area network.

### DESCRIPTION OF THE ILLUSTRATIVE EMBODIMENTS

The present invention will be described with reference to certain embodiments and to certain drawings but the present invention is not limited thereto but only by the claims. For instance a wide area network will be described with reference to wireline telephone access but the present invention is not limited thereto and may include other forms of access such as a Local Area Network, e.g. an Intranet, a Wide Area Network, a Metropolitan Access Network, a mobile telephone network, a cable TV network.

One aspect of the present invention is to provide server capability in premises which can be owned and maintained by a the telecom provider, for example in a "point-of-presence" (POP) 12. Another aspect of the present invention is to provide a Remote Access IP network infrastructure that can be deployed anywhere in a wide area network, for example, also at the edges of the network rather than exclusively in a centralised operations centre. Yet another aspect of the present invention is to provide a distributed server architecture within a wide area telecommunications network such as provided by public telephone companies. Yet a further aspect of the present invention is to provide an based network management architecture (using a suitable management protocol such as the Simple Network Management Protocol, SNMP or similar) to remotely configure, manage and maintain the complete network from a centralised "Network Management Centre" 10. The SNMP protocol exchanges network information through messages known as protocol data units (or PDU's)). From a high-level perspective, the message (PDU) can be looked at as an object that contains variables that have both titles and values. There are five types of PDU's that SNMP employs to monitor a network: two deal with reading terminal data, two deal with setting terminal data, and one, the trap, is used for monitoring network events such as terminal start-ups or shut-downs. Therefore, if a user wants to see if a terminal is attached to the network, SNMP is used to send out a read PDU to that terminal. If the terminal was attached to the network, the user would receive back the PDU, it's value being "yes, the terminal is attached". If the terminal is shut off, the user would receive a packet sent out by the terminal being shut off informing of the shutdown. In this instance a trap PDU would be dispatched.

The deployment of the equipment in the network edges, for example in the POPs 12, can be done by technicians because the present invention allows a relatively simple hardware set up. The set-up is completed, e.g. configuration and security set up, by the network engineers remotely via the network, e.g. from a centralised operations centre 10. If modifications of the structure are needed, this can usually be carried out remotely without going on-site. If infrastructure changes or upgrades in the network edges are mandatory, such as increasing incoming line capacity, technicians can execute the required changes (in the above example by adding network cards) whilst the network engineers are monitoring remotely the progress and successful finalisation.

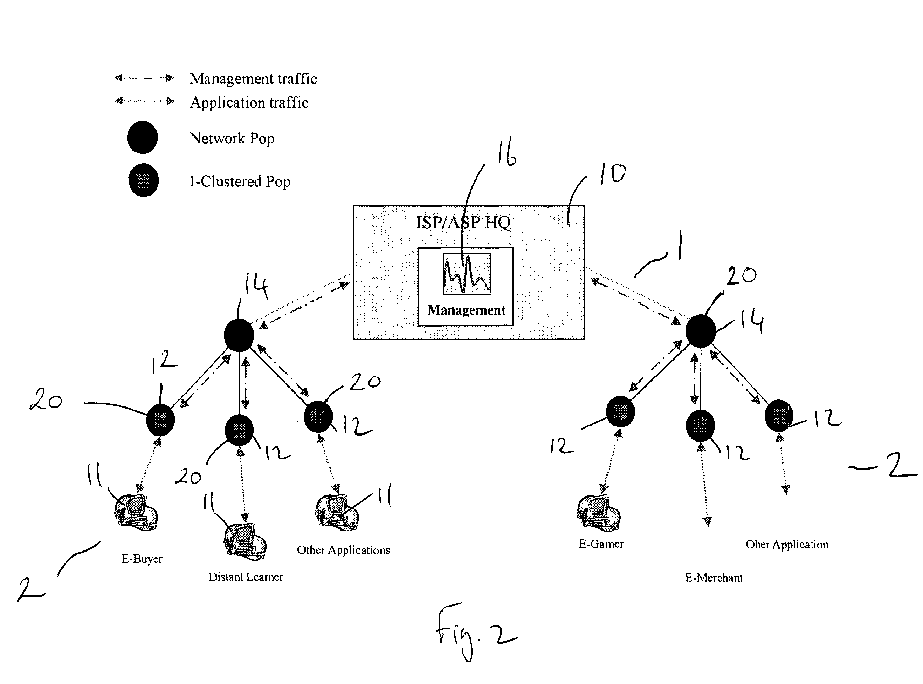

An embodiment of the present invention will be described with reference to Fig 2. A wide area network 1 which may span a town, a country, a continent or two or more continents is accessed by an access network 2. The access network will typically be a wireline telephone or a mobile telephone system but other access networks are included within the scope of the present invention as described above. Typically, POP's 12 are placed at the interface of the wide area network or data carrier network 1 and an access network 2. Application servers installed in server modules 20 may be located anywhere in the data carrier network 1, for instance, in a network POP 12, 14 whereas management of the server modules 20 is achieved by network connection rather than by using a local data input device such as a keyboard connected to each server. For instance, the server modules 20 may be located at the edges of the network 1 in the POP's 12 and are managed centrally through a hierarchical SNMP managed platform 16 in an operations centre 10. Preferably, application servers (e.g. for providing applications for e-Shops, E-Mail intranet servers, e-Game servers, Computer Based Training packages) are card mounted and are insertable as required in a standard chassis, for instance a plurality of chassis' can be installed in a standard 19" cabinet. The applications running on the servers 20 are preferably provisioned remotely. The application server module 20 runs server software to provide a certain service, e.g. a homepage of an e-merchant. The person who makes use of the server module 20 to offer services will be called a "user" in the following. A user may be a merchant who offers services via the Internet. The person who makes use of the server module 20 to obtain a service offered by a user, e.g. by a merchant, will be called a "customer".

A customer 11 can access the application running on one of the servers 20 located at the relevant POP 12, 14 from their own terminal, e.g. from a personal computer linked to an analog telephone line through a modem. In addition, each server of the group of servers in a server module 20 in a POP 12, 14 is remotely addressable, e.g. from a browser running on a remote computer which is in communication with the Internet. For instance, each server in a server module 20 has its own network address, e.g. a URL on the World-Wide-Web (WWW) hence each server can be accessed either locally or remotely. However, to improve graceful capacity upgrading and scalability, it is preferred if a server module 20 has a single internet address and that each server in the server module 20 is accessed via a proxy server in the server module 20 using URL extensions. Thus, a server module 20, in accordance with one implementation of the present invention can provide an expanadble "e-shopping mall", wherein each "e-shop" is provided by one or more servers. The server module 20 is remotely reconfigurable from an operations centre 10, for instance a new or updated server program can be downloaded to each of the servers in the server module. Each server of the server module 20 can also be provisioned remotely, e.g. by the user of the application running on the respective server using an Internet connection. This provisioning is done by a safe link to the relevant server.

Embodiments of the present invention are particularly advantageous for providing access to local businesses by local customers 11. It is assumed that many small businesses have a geographically restricted customer base. These customers 11 will welcome rapid access to an application server 20 which is available via a local telephone call and does not involve a long and slow routing path through network 1. The data traffic is mainly limited to flow to and from the POP 12 and does not have to travel a considerable distance in network 1 to reach a centralised data centre. More remote customers 11 can still access server module 20 and any one of the servers therein via network 1 as each server is remotely accessible via an identification reference or address within the network 1.

Even when a server module 20 is located in an operations centre 10 in accordance with the present invention, its provisioning and configuration is carried out via a network connection. That is, normally a server has a data entry device such as a keyboard and a visual dsiply unit such as a monitor to allow the configuration and provisioning of the server with server applications and application in-line data. In accordance with the present invention all this work is carried out via a network connection, e.g. via a LAN connection such as an Ethernet™ interface.

The present invention may also be used to reduce congestion due to geographic or temporal overloading of the system. The operator of netork 1 can monitor usage, for example each server of a server module may also provide statistical usage data to the network 1. Hence, the network operator can determine which applications on which server modules 20 receive a larger number of accesses from remote locations in comparison to the number from locations local to the relevant POP 12, i.e. the network operator can determine when a server application is poorly located geographically. This application can then be moved to, or copied to, a more suitable location from a traffic optimisation point of view. Applications can be duplicated so that the same service can be obtained from several POP's 12, 14. For instance, if a TV commercial is to be run which is likely to result in a sudden flood of enquiries to a particular server, the relevant application can be provisioned remotely on a number of servers located in server modules 20 in different geographic areas before the commercial is broadcast. The distributed access will reduce network loads after the broadcast. Thus, the present invention allows simple and economical scalability both from the point of view of the network operator as well as from that of the user or the customer.

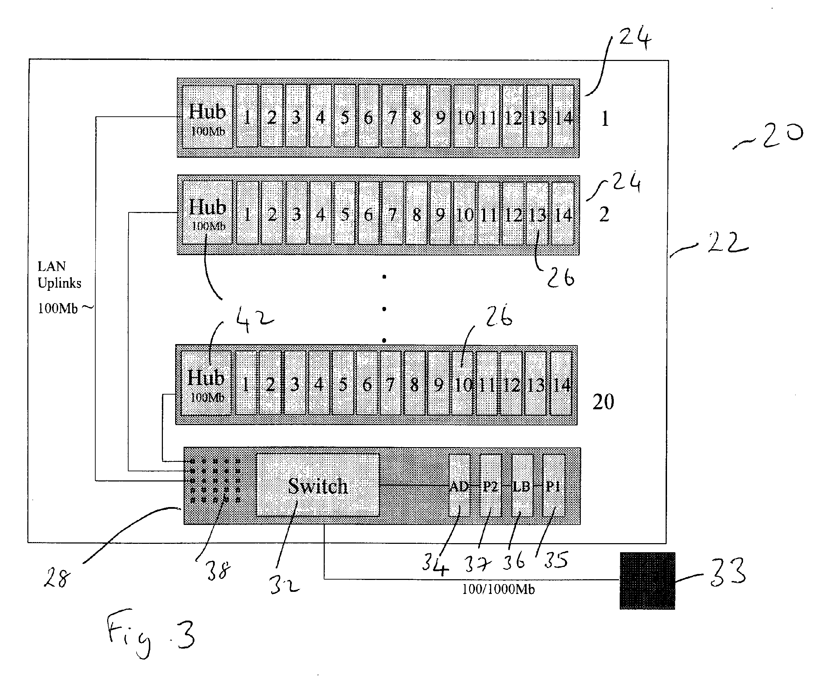

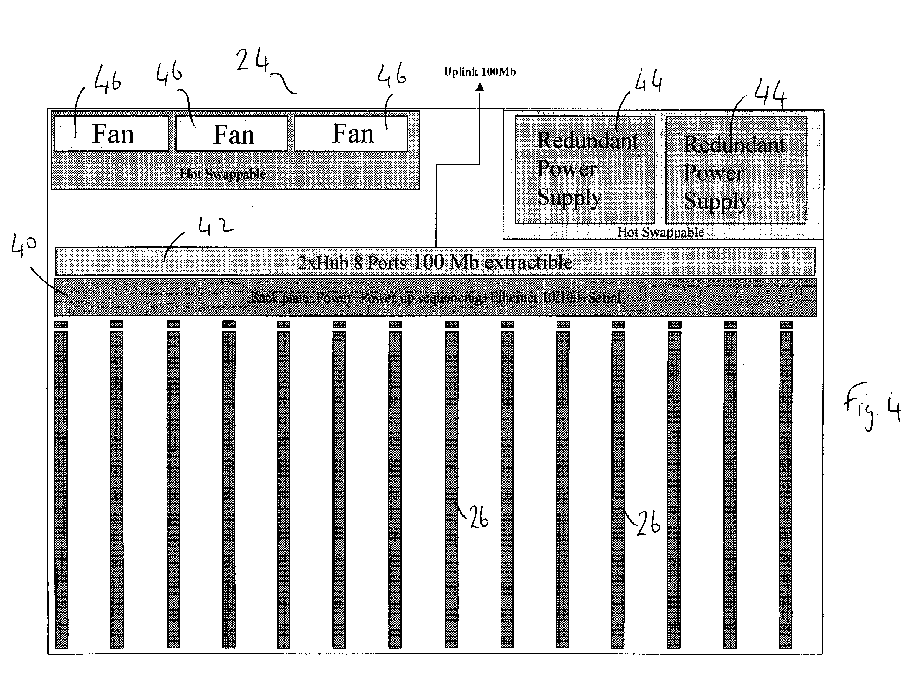

A server module 20 in accordance with an embodiment of the present invention is shown schematically in front view in Figs. 3 and 4. A standard 19" cabinet 22 contains at least one and preferably a plurality of chassis' 24, e.g. 20 chassis' per cabinet 22. These chassis 24 may be arranged in a vertical stack as shown but the present invention is not limited thereot. Each chassis 24 includes at least one and preferably a plurality of pluggable or insertable server cards 26, e.g. 14 server cards in one chassis, resulting in a total of 280 server cards per cabinet 22. The server cards 26 are connected to an active back plane. In addition a management chassis 28 may be provided, e.g. one per cabinet 22, which is responsible for managing all the server cards 26 and for providing a remote management (for example, SNMP) and proxy server functionality. The management chassis 28 includes a switch 32 which is preferably extractable and a suitable interface 33 to provide access to the network to which the server module 20 is connected. The management chassis 28 may, for instance, be composed of 4 server cards 34-37, a patch panel 38 and a back plane 40 for concentrating the connection of the patch panel 38 and of the server cards 34-37. The four server cards include at least one proxy server card 35, an optional proxy server card 37 as back-up, a load balancing card 36 and an administration card 34. The management chassis 28 is used to concentrate network traffic and monitor all equipment. The server cards 26 are interconnected via the patch panel 38 and one or more hubs 42 into a Local Area Network (LAN). This specific hardware solution meets the constraints of a conventional telecom room:
Space: High density with 280 servers in a standard cabinet.
Low heat dissipation, EMC 3 Compliance.
High availability through critical elements redundancy.
Optimised Maintenance with easy access and removal of all components.

A chassis 24 is shown schematically in a top view in Fig. 4. It includes a plurality of server cards 26 plugged into a back plane 40 which is integrated with an active or passive hub 42. One or more power supplies 44 are provided for powering the server cards 26 and the hub 42 if it in an active hub. The power supplies 44 are preferably hot swappable in case of failure.To provide cooling one or more fans 46 may be provided. Again, the fans 46 are preferably hot swappable. Each server card 26 is preferably planar with a connector for plugging into a back plane along one edge. The server card is preferably thin, e.g. its thickness should be at least four times less than any of its planar dimensions.

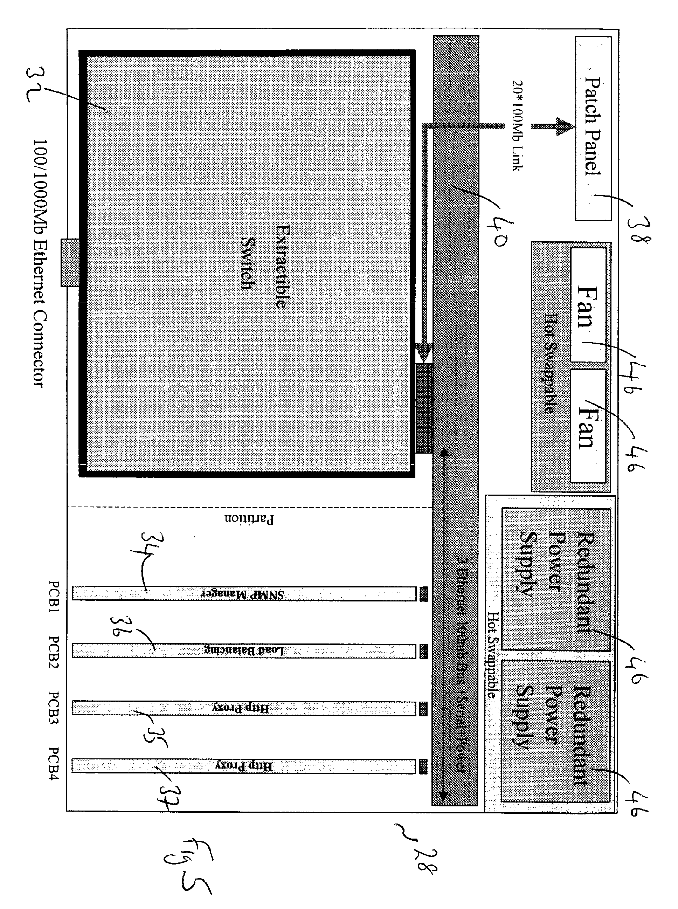

A management chassis 28 is shown schematically in top view in Fig. 5. It includes a plurality of printed circuit boards 34-37 plugged into a back plane/bus 40 which provides a data bus as well as power connections. The printed circuit cards 34-37 may be of the same hardware design as the server cards 26 but are installed with different software. An extractable multi-media switch 32 is provided which is coupled to the patch panel 38 and from there via the LAN with hubs 42 and server cards 26. Fans 46 and power supplies 44 are also provided.

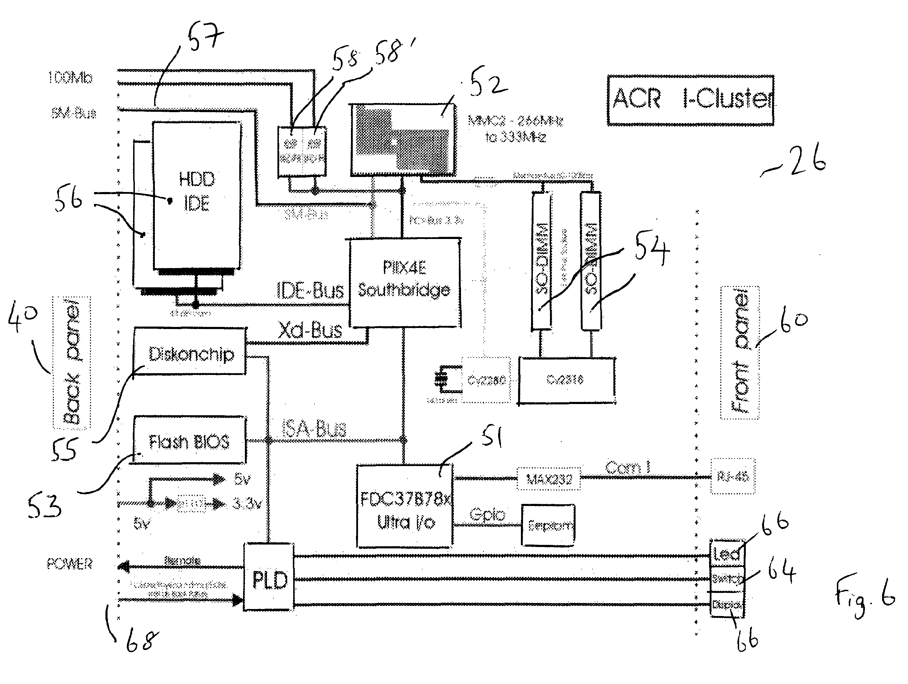

Each server card 26 includes a server which has been stripped down to absolute essentials in order to save space and to lower power usage and heat generation. Each server card 26 is preferably pluggable so that it can be easily removed and replaced without requiring engineer intervention nor the removal of connections, wires or cables. A server card 26 in accordance with an embodiment of the present invention is shown schematically in Fig. 6. The components of server card 26 are preferably mechanically robust so that a card may be handled by technicians and not by specially qualified engineers, e.g. without having using any other precautions than would be expected of a person inserting a memory card, a battery or a hard drive into a lap-top computer. The skilled person will appreciate from Fig. 6 that the server card 26 is configured to provide a programmable computer with non-volatile, re-writable storage. Each server card 26 may include a central processing unit 52 such as an Intel Pentium™ Processor at 333Mhz, a frandom access memory unit (RAM) 54, e.g. 2 x 64 = 128 Mb of RAM memory, for example flash memory, a rewritable, non-volatile secure memory 55, e.g. a disk-on-chip memory unit 2000 M-Systems 11, a BIOS memory 53, e.g. a flash memory, and at least one rewritable, non-volatile storage device 56 such as a hard drive or similar drive memory. Program code, e.g. the operating system as well as any system, network and server management programs are preferably included in the secure memory 55, e.g. encrypted and/or scrambled. User applications may be loaded onto the storage device 56 as would normally be done on a personal computer or a server, e.g. on the disc drive 56, however it is particularly preferred in accordance with an embodiment of the present invention if each server card 26 is dedicated to a single user application. For instance, a sepcific application program or suitae of programs is loaded into memory 55 to provide a single application functionality for the server card 26. This reduces the size of the memory 55 and simplifies operation of the server card 26. Preferably, this application program or suite of programs is not stored on the hard drive 56 but is pre-installed into the memory 55. The hard drive 56 is preferably only used to store the in-line data necessary for the pre-installed merchant program (e.g. colurs of displays, prices, pictures of goods offered, video data, intilialisation parameters). Hence, each server card 26 preferably contains a solid state memory device (SSD) 55 which contains all the software programs needed to run and control the application chosen for card 26. All the variable information such as user files and temporary files will be stored on the mirrored hard disks 56. Each hard disk 56 may be divided into two partitions, one being reserved for temporary files, log files and all system files which must be written. The system preferably contains two hard disk 56 which will be kept identical through a software mirroring program, so that if one of the disks 56 fail the system stays fully operational. The two rewritable, non-volatile storgae devices 56 may be two IDE hard disks of 10 Gbytes.

The isolation of system and user code from the storgae device 56 (which can be accessed by customers) improves security. Preferably, the storage device 56 is replaceable, i.e. pluggable or insertable without requiring complex or intricate removal of wiring or connectors. Such a replaceable storage unit is well known to the skilled person, e.g. the replaceable hard disc of some lap-top computers.Each storage device 56 is preferably mechanically held in place on the card 26 by means of a suitable clipping arangement. The storage device 56 co-operates with the CPU 52, i.e. it is accessed after boot up of the processor unit 52 for the running of application programs loaded into memory 55. To allow communication with the LAN, at least one network interface chip 58 is provided. Preferably, two interface chips 58, 58' are provided, e.g. two Ethernet™ 100 Mb interfaces. Also one serial bus connection for the management of the server card (S-M bus) 57 is provided which is connected to the administration card 34 via the server module LAN. A front panel 60 is provided with an RJ-45 jack for on-site monitoring purposes via a serial communication port (COM 1) driven by a suitable input/output device 51 as well as an off-on control switch 64 and control indicators 66, e.g. LED's showing status, for instance "power off" or "power on". The server card 26 is plugged into a back plane 40. For this purpose the server card 26 includes a connector 68 which may be a zero insertion force (ZIF) connector. The back plane connection is for providing power both to the server electronics as well as to the warning lights 66 on the front panel 60, as well as for connections to two ethernet 100 Mb connections 58, 58' and the one serial connection 57 for physical parameters monitoring. The fans 46 draw air from the back of the chassis 24. The air flow is designed to pass over a heatsink on the CPU 52, which is located towards the front. The air passes over the storage devices 56, which are at the back.

The skilled person will appreciate that the server 26 provides a digital processing engine on a card which has all the items necessary to operate as such except for the power units. Thus an individual card may be plugged into a suitable housing with a poer supply to provide a personal computer. Hence, the server card 26 may be described as a digital processing engine comprising a disc memory unit 56 mounted on a motherboard.

The installation and operation of a server module 20 will now be described. A server module 20 comprises a number of server cards 26 installed into one or more chassis' 24 and a management chassis 28 all of which are installed in a cabinet 22 and located in a POP 12. Each server card 26 is pre-installed with a specific application, although not all the server cards 26 must be running the same application.

The server module 20 includes a proxy server 35, 37 connected to the wide area network 1 and is provided with remote management (from the operations centre 10) via a suitable management connection and protocol, e.g. SNMP version 1 or 2. If the server module 20 is to be used with an Internet TCP/IP network, the proxy server 35, 37 may use the HTTP 1.1. protocol. Each server card 26 has a preinstalled application which can be accessed, for example, by a customer browser. The configuration details of the home page of any server card 26 are downloaded remotely via the user who has purchased or rented the server card use. This information is downloaded via access network 2, e.g. by coupling a user personal computer or work station to the respective server card 26 via the access network 2. Each user prepares a command file using proprietary software which is transmitted to the relevant server card 26 in a safe messaging session protected by suitable authentication routines and encryption. All communications done between the user software and the server module 20 whatever the direction are encrypted using a suitable secure messaging system such as the Secure Socket Layer (SSL).

The proprietary software only needs to relate to the specific application for which the relevant server card 26 is dedicated and may include a software library especially designed for the user, e.g. for e-commerce. Once installed and provisioned, each server card 26 can be accessed remotely by either the user or a customer 11. Each server card 26 will be dedicated to one organisation (= one user) and and to one application and will not be shared between organisations. This increases security. In use, each server card 26 is monitored remotely via the network side management connections (SNMP) of server module 20. If a component defect is reported, e.g. loss of a CPU on a server card, a technician can be instructed to replace the defective card 26 with a new one. Such a replacement card 26 may have the relevant server application pre-installed on it in advance to provide seamless access. If a hard drive 56 becomes defective, the stand-by hard drive 56 of the pair may be substituted by a technician. The load balancing card 36, the proxy server cards 35, 37 and the administration 34 may all have the same hardware design as server card 26. However, the software loaded into memory 55 on each of these cards 34-37 is appropriate for the task each card is to perform.

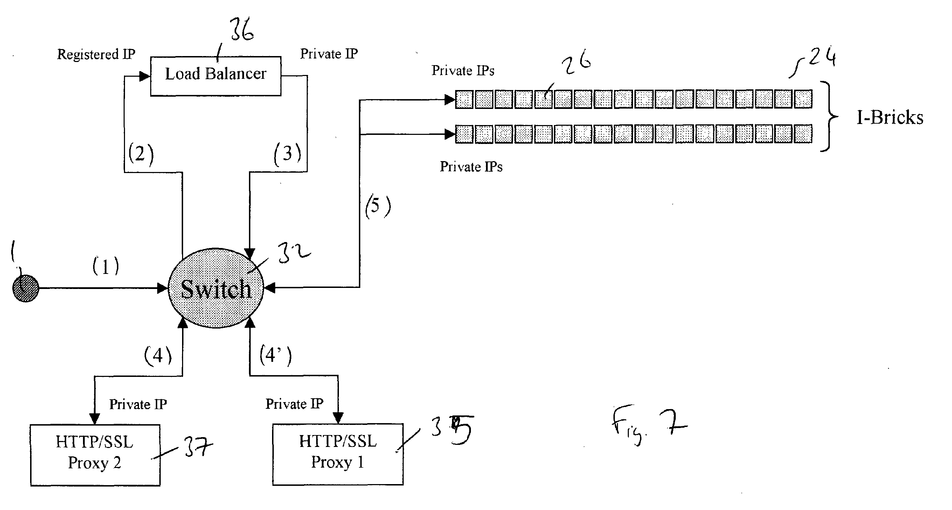

A typical access of a server card 26 will now be described. On power up, each server card 26 boots using the content of the SSD 55 and will then configure itself, asking a configuration which it access and retriieves from the administration card 34. Since each server card 26 hosts a specific user it is mandatory that a card 26 is able to retrieve its own configuration each time it starts. The proxy server functionality is composed of at least two, preferably three elements. For instance, firstly the load balancing card 36 which distributes the request to one of the two proxy servers 35, 37 and is able to fall back on one of them in case of failure, e.g. if the chosen proxy server 35, 37 does not react within a time-out, and at least HTTP 1.1 proxy server 35, 37, preferably two to provide redundancy and improved performance. The procedure is shown schematically in Fig. 7. A customer 11 accesses the relevant WWW site for the server module 20. The network service provider DNS connects the domain with the IP address of the server module 20. The request arrives (1) at module 20 from the network at the switch 32 which directs (2) the request to the load balancing card 36 of the management chassis 28. The load balancing card 36 redirects (3, 4) the request to one of the two proxy servers 35, 37 dependening upon the respective loading of each via the switch 32. The relevant proxy server 35, 37 analyzes the HTTP 1.1 headers in the request an redirects (5) the request to the right server card 26 using an internal IP address for tha server card 26. This internal IP address of each server card 26 is not visible outside the server module 20. The server card 26 processes the request and sends (5) the answer back to the proxy server card 35, 37 which forwards the answer to the requester. This procedure relies on the HTTP 1.1 proxy solution. This means that request will be redirected according to the domain name of the request. This information is provided by the HTTP 1.1 protocol. All 4.x an higher browsers use this protocol version.

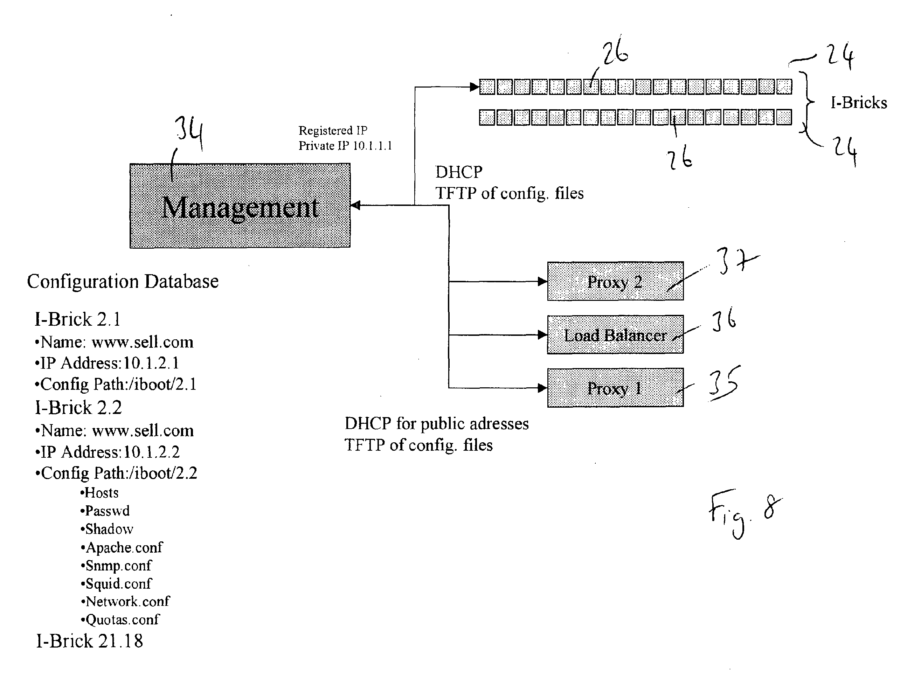

In order to avoid the typical updating problem with distributed processors, e.g. software maintenance and updating, on the server cards 26, a centralized network-side management of all parameters is implemented. If needed (upgrade of the server application, security patch, load of virus signatures for an antivirus program) the administration card 34 is able to upload a new SSD (solid state disc) image onto any or all of the server cards 26 and can force an upgrade of the system software. Any new boot scripts will also support all the automatic raid recovery operation upon the replacement of a defective hard disk 56. The administration card 34 is updated/managed as necessary via the network 1 from operations center 20. When a server card 26 boots, it retrieves its configuration from the administration card 34 (Fig. 8). First it retrieves its IP configuration according its position in the server module 20. Then it downloads all its configuration files and upgrades its software if needed. Suitable protocols are used for these actions, e.g. DHCP (Dynamic Host Configuration Protocol) may be used for the IP configuration retrieval and TFTP for the software configuration. The DHCP solution will rely on the identification of the card by its MAC address (boot like). The updating procedure is therefore in two steps:
firstly, an update is broadcast via network 1 to one or more server modules 20 where the update is stored in the administration card 34. Then on power-up of each server card 26, the update is loaded as part of the automatic retrieval procedure from the administration card 34.

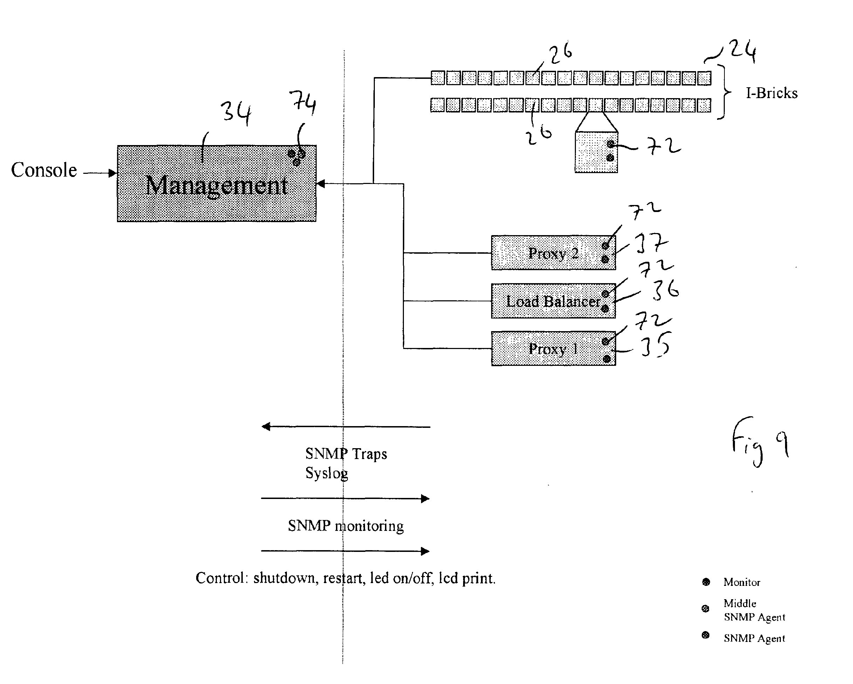

When a server card 26 is assigned to a user it will be provided with its internal IP address. The server 20 allows basic monitoring and management through an HTML interface in order to allow decentralised management from the operations centre 10. This monitoring will be done through authenticated SSL connection (Secure Socket Layer protocol which includes encryption for security purposes). As part of the management function the server module 20 management data is transferred to the operations centre 10 in accordance with (MIB) Management Information Base II. In addition it is preferred to extend this protocol to allow additional states to be monitored, e.g. a MIB II+ protocol, for recording and transmitting additional events as well as data useful to the provider of network 1 such as network utilisation. The additions to MIB II are provided to allow the monitoring of each server card 26 of a server module 20. Information about the configuration, the running status, network statistics may be retrieved. Physical parameters such as fan speed, temperature, of each chassis 24 may also be monitored remotely by this means. The monitoring may be performed by a sequence of agents running on the relevant part of the system, e.g. an SNMP agent 72 responsible will collect or set information from configuration files, will get real time statistic from each server card 26 and will get data from physical sensors in the chassis' 24. Preferably, a middle agent 74 monitors all SNMP traps, pool statistics from the server cards 26 and will be able to react to specifics errors and transmits these to the remote operations centre 10 via network 1 (Fig. 9).

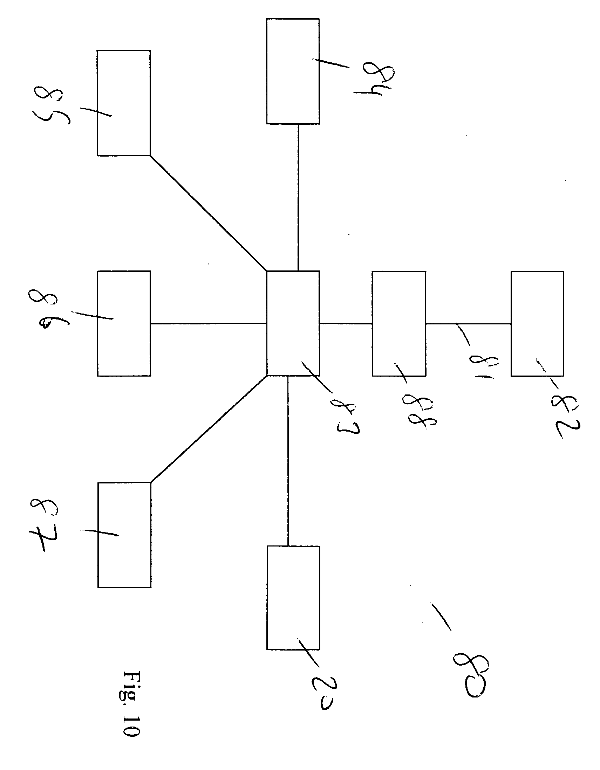

In the above, a server module 20 in accordance with the present invention has been described for use in a wide area data carrier network. The server module 20 as described may also find advantageous use in a Local Area Network as shown schematically in Fig. 10. For example, LAN 80 my be an Intranet of a business enterprise. Server module 20 is connected in a LAN 80. Server module 20 may have an optional connection 81 to a remote maintenance centre 82 via LAN 80, a switch 83 and a router 88 or similar connection to a wide area network, e.g. the Internet to which centre 82 is also in communication. The LAN 80 may have the usual LAN network elements such as a Personal Computer 84, a printer 85, a fax machine 86, a scanner 87 all of which are connected with each other via the LAN 80 and the switch 83. Each server card 26 in the server module 20 is preferably preinstalled with a specific application program, such as a text processing application such as Microsoft's WORD or Corel's WordPerfect, or a graphical program such as Corel Draw, etc. Each PC 83 can retrieve these programs as required - for each different application a different server card 26. In addition, a server card 26 may be allocated to each PC 84 for file back-up purposes on the hard disc 56 thereof. 280 server cards provides ample server capacity to provide a Small or Medium sized Enterprise with the required application programs and back-up disc (56) space.

In case one of the server cards 26 goes down, it is only necessary for a similar card with the same application to be installed. While other applications can continue running. This improves outage times of the system and increases efficiency. The loss of a server card 26 may be detected locally by observing the status lights on the front panels 60 of the server cards 26. Alternatively, the operation of server cards 26 may be monitored by the maintenance centre 82 as described above for operations centre 10. Also software updates by be sent from maintenance centre 82 in the two step updating procedure described above.

## Claims

1. A wide area data carrier network comprising:
one or more access networks;
a plurality of server units housed in a server module and installed on said wide area data carrier network so that each server module is accessible from the one or more access networks, the server module being adapted so that it may be located at any position in the wide area network; and
an operations centre for management of the server module, the server module being connected to the operations centre for the exchange of management messages through a network connection.

2. The wide area network according to claim 1, wherein the server units are active servers.

3. The wide area NetWare according to claim 1 or 2, wherein the management messages comprises at least any one of: remote monitoring of the status of any server unit in a module, trapping alarms, providing software updates, activating an unassigned server module, assigning a server module to a specific user, extracting usage data from a server module or server unit, intrusion detection (hacker detection).

4. The wide area network according to any previous claim, wherein each server unit includes a central processor unit and a secure memory device for storing the operating system and at least one application program for running the server unit.

5. The wide are network according to claim 4, wherein the secure memory device is a solid state device.

6. The wide area network according to any previous claim wherein each server unit comprises a rewritable, non-volatile disc storage device.

7. The wide are network according to claim 6, wherein the server unit is adapted so that the rewritable, non-volatile storage device contains only data required to execute the application program and/or operating system program stored in the secure memory device but does not contain program code.

8. The wide area network according to claim 7, wherein the central processing unit not bootable via the rewritable, non-volatile storage device.

9. The wide area network according to any previous claim wherein each server unit is mounted on a pluggable card.

10. The wide area network in accordance with any previous claim, wherein the server module is mounted in a point of presence (POP).

11. A method of operating a wide area data carrier network having one or more access networks comprising the steps of:
providing a plurality of server units housed in a server module in said wide area data carrier network so that each server module is accessible from the one or more access networks;
providing management of the server module remotely through a network connection to the server module.

12. The method according to claim 11, further comprising the step of removing a server unit from a server module and plugging a server unit into the server module.

13. A server module comprising:
at least one server card insertable in the server module, the server card having a central processing unit and at least one rewritable, non-volatile disc memory device mounted on the card.

14. The server module according to claim 13, wherein an Input/Output (I/O) device is mounted on the card.

15. The server module according to claim 13 or 14, wherein at least one local area network interface is mounted on the card.

16. The server module according to any of claims 13 to 15, further comprising a solid state memory device mounted on the card.

17. The server module according to claim 16, wherein the operating system for the central processing unit and optionally at least one application program is pre-installed in the solid state memory device.

18. The server module according to any of the claims 13 to 17, further comprising a proxy server.

19. The server module according to any of claims 13 to 18, further comprising a management unit for monitoring the server unit.

20. A digital processing engine mounted on a card, the card being adapted to be pluggable into a connector, the digital processing card comprising:
a central processor unit; and
a rewritable, non-volatile disk memory unit mounted on the card.

21. The engine according to claim 20, further comprising a rewritable non-volatile solid state memory device (SSD) mounted on the card.

22. The engine according to claim 21, wherein the SSD stores an operating system program and at least one application program for execution by the central processing unit.

23. The engine according to claim 21 or 22, wherein the disc memory is a hard disc.

24. The engine according to any of claims 21 to 23, further comprising an input/output device on the card.

25. The engine according to any of claims 21 to 24, wherein the engine is a server.
